# EUROPÄISCHE PATENTSCHRIFT

(11) **EP 0 572 355 B1**
(45) Veröffentlichungstag und Bekanntmachung des Hinweises auf die Patenterteilung: **24.04.1996**
(21) Anmeldenummer: 93810375.1
(22) Anmeldetag: 21.05.1993
(51) Int. Cl.: B01D 53/22, B01D 61/36, B29L 31/24

(54) **Modul zur Durchführung der Pervaporation von Fluiden**
Module for executing the pervaporation of fluids
Module mettant en oeuvre la pervaporation de fluides

(30) Priorität: 27.05.1992 CH 1720/92
(43) Veröffentlichungstag der Anmeldung: 01.12.1993
(73) Patentinhaber: KREBS & Co. AG, CH-8022 Zürich (CH)
(72) Erfinder: Danziger, R.S., CH-8134 Adliswil (CH); Gerrath, C., CH-8135 Langnau a.A. (CH)
(74) Vertreter: Feldmann, Clarence Paul

(56) Entgegenhaltungen:
- EP-A- 0 118 760
- EP-A- 0 164 326
- US-A- 3 695 444
- PATENT ABSTRACTS OF JAPAN vol. 012, no. 299 (C-520)15. August 1988 & JP-A-63 069 506 (MITSUI ENG & SHIPBUILD CO. LTD.) 29. März 1988

## Beschreibung

Die Pervaporation ist ein Membrantrennverfahren, mittels dem ein oder mehrere Anteile eines Fluidgemisches mittels Permeation abgetrennt wird. Durch die permselektive Membran, dessen eine Seite von der Flüssigkeit überströmt wird, diffundiert eine Komponente bevorzugt im Vergleich zu den anderen Komponenten. Die hindurch diffundierte Flüssigkeit ist das Permeat, während die Restflüssigkeit als Retentat bezeichnet wird. Auf der Permeatseite der Membran wird üblicherweise ein Vakuum angelegt, welches zur Verdampfung des Permeats führt.

Die Pervaporation wird durch Wärmezufuhr verbessert, weil hierdurch der Diffusionsvorgang beschleunigt wird, weil ferner die Verdampfung des Permeats in der Pervaporationskammer erleichtert wird, und weil schliesslich der Wärmeverlust durch Verdampfungsenthalpie kompensiert wird. Dabei ist die Homogenität der Temperaturverteilung äusserst wichtig.

Aus der GB-A-938'127 ist ein Modul zur Durchführung der Pervaporation von Fluiden gemäss Oberbegriff des Patentanspruches bekannt. Dieses Modul ist besonders geeignet zur Anreicherung von Uran mit dem Isotop 235 mittels Diffusion. Entsprechend ist hier die Temperaturführung von geringerer Bedeutung als beispielsweise bei der Pervaporation in chemischen Verfahrensanlagen bei denen die Reinheit eines Fluids erhöht werden soll. Folglich arbeitet das bekannte Modul ohne Heizkammern.

Ein Modul, welches zusätzlich noch eine Heizkammer aufweist, ist aus der JP-A-63-59310 bekannt. Hier werden zwei Durchflussräume, welche einerseits von zwei permeablen Membranen und andererseits von einer Heizplatte begrenzt sind, gebildet und die Retentatseite der Membran gekühlt. Dies erlaubt jedoch, in der zu pervaporierenden Flüssigkeit keine gleichmässige Temperaturverteilung. Zudem ergibt eine solche Bauweise ein ungünstiges Verhältnis von der Baugrösse zur hindurchzuführenden Flüssigkeitsmenge.

Auch die EP-A-0'118'760 und die US-A-3'695'444 offenbaren Module, die einen sandwichartigen Aufbau aus aneinander anliegenden, sich gegenseitig begrenzenden Heizkammern, Pervaporationskammern und Retentatkammern. Solche Module lassen sich sehr kompakt herstellen, sind jedoch nur für geringe Durchflussmengen geeignet und durch die mäandernden Fliesswege durch eine Folge von Kammern mit einem hohen Fliesswiderstand behaftet.

Prinzipiell denselben Aufbau hat auch das Modul gemäss der EP-A-0'164'326. Der Unterschied ist hier lediglich, dass die jeweils benachbarten Kammern nicht plattenförmig sukzessiv nebeneinander, sondern sind konzentrisch ineinander geschachtelt.

Die vorliegende Erfindung hat sich daher zur Aufgabe gestellt, ein Modul, gemäss Oberbegriff des Patentanspruches, so zu verbessern, dass ein hoher Flüssigkeitsdurchsatz in Bezug auf das Volumen des Moduls bei optimaler Temperaturverteilung ermöglicht wird.

Diese Aufgabe löst ein Modul mit den Merkmalen des Patentanspruches 1. Eine solche Anordnung erlaubt eine dichte Packung von abwechslungsweise Heizkassetten und Pervaporationskassetten, die berührungsfrei im Durchlaufbehältnis gehalten sind, was eine gleichmässige Strömung der Flüssigkeit bewirkt, eine optimale Temperaturverteilung ermöglicht und eine hohe Durchsatzmenge erlaubt.

Eine besonders vorteilhafte Ausgestaltung, welche preiswert zu fertigen und optimal in der Montage und im Unterhalt ist, beschreibt Anspruch 2. Weil von einer Seite die Heizkassetten und von der anderen Seite die Pervaporationskassetten, die kammartig zueinander im Durchströmungsbehältnis liegen, zugänglich sind und daher ausgewechselt werden können.

Für die exakte Lagerung der Kassetten, relativ zueinander, ist es von Vorteil im Durchlaufbehältnis kammartige Stützen anzubringen.

Die Ausgestaltung nach Anspruch 4, garantiert den verformungsfreien Verlauf aller Wände des Durchlaufbehältnisses, wodurch exakte Strömungsverhältnisse erst gesichert sind.
Dasselbe wird auch durch die besondere Gestaltung der Pervaporationskassetten und Heizkassetten gemäss Anspruch 5, beziehungsweise 6 erreicht, da die entsprechende Roste Verformungen durch Ueberdruck beziehungsweise Unterdruck in den entsprechenden Kassetten aufgefangen werden können.
Auch die Anbringung mehrerer Einlass- und Auslassanschlüsse an den Heiz- und Pervaporationskassetten führt zu einer Verbesserung der Strömungs- und Temperaturführungsverhältnisse. Die Gestaltung des erfindungsgemässen Moduls ist nicht auf kubische Formen des Durchströmungsbehältnisses begrenzt, was die Lösung gemäss Anspruch 9 aufzeigt.

In der anliegenden Zeichnung sind die einzelnen Teile einer bevorzugten Lösung des erfindungsgemässen Moduls zur Pervaporation von Fluiden dargestellt und in der nachfolgenden Beschreibung erläutert.

Es zeigt:
- Figur 1: ein Durchlaufbehältnis in der Aufsicht und teilweise ins Schnitt, sowie
- Figur 2: in der Seitenansicht und teilweise in Schnitt;
- Figur 3: einer Pervaporationskassette in der Aufsicht und
- Figur 4: in der Seitenansicht;
- Figur 5: eine Heizkassette in der Aufsicht und
- Figur 6: in der Seitensicht, sowie
- Figur 7: einen in den Heizkassetten zuliegen kommender Rost in der Seitenansicht.

Das erfindungsgemässe Modul zur Durchführung der Pervaporation von Fluiden weist drei wesentliche Bauteile auf, nämlich ein Durchlaufbehältnis 1, in dem eine oder mehrere Pervaporationskassette 2, beziehungsweise -kassetten und mehrere Heizkassetten 3 angeordnet sind. In der einfachsten Form der Ausgestaltung ist im Durchlaufbehältnis 1 eine Pervaporationskassette 2, welche zwischen zwei Heizkassetten 3 gelagert ist, vorgesehen. Dabei hat das Durchlaufbehältnis die Form eines flachen, quaderförmigen Kastens und die verschiedenen Kassetten 2, 3 haben die Gestalt von Platten, wobei die Platten jeder Kassette eine Kammer bilden. Eine solche Ausführung ist in der Zeichung im Detail dargestellt.

Die Erfindung begrenzt sich jedoch nicht auf eine solche Ausführungsform. Beispielsweise könnte das Durchlaufbehältnis auch die Gestalt eines Zylinders haben. In einer solchen Ausführung lassen sich dann die plattenförmigen Pervaporations- und Heizkassetten alternierend und radial verlaufend, sternförmig nebeneinander angeordnet sein. Bei einer solchen Ausführung, die in der Zeichnung nicht dargestellt ist, lassen sich, beispielsweise alle Heizkassetten oder alle Pervaporationskassetten an einem Achsialträger angeordnet sein und über diese zentralgespiesen, beziehungsweise mit einer Vakuumpumpe in Verbindung stehen. Die Zylinderwand des Durchlaufbehälters kann dann als Träger der anderen Kassetten dienen. Nachfolgend wird auf eine solche Ausführung nicht weiter eingegangen, weil die Gestalt, insbesondere der Kassetten und deren relative Anordnung zueinander, unbeeinflusst bleibt. Lediglich mussten die Kassetten von der Zylinderachse zur Zylinderwand in der Dicke zunehmend sein, damit die Spalten zwischen den Kassetten überall gleich sind und das Fluid überall gleichmässig durchströmt.

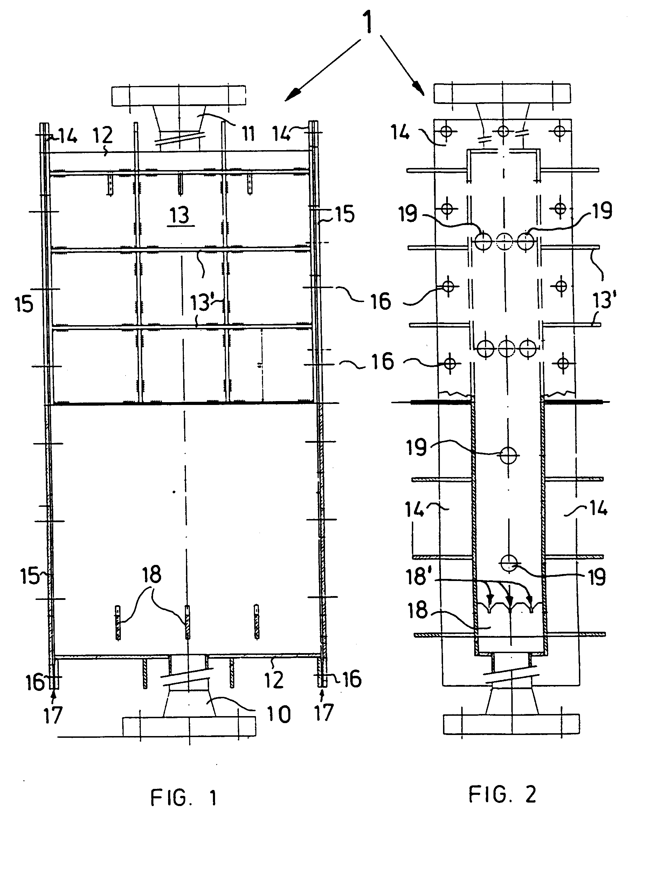

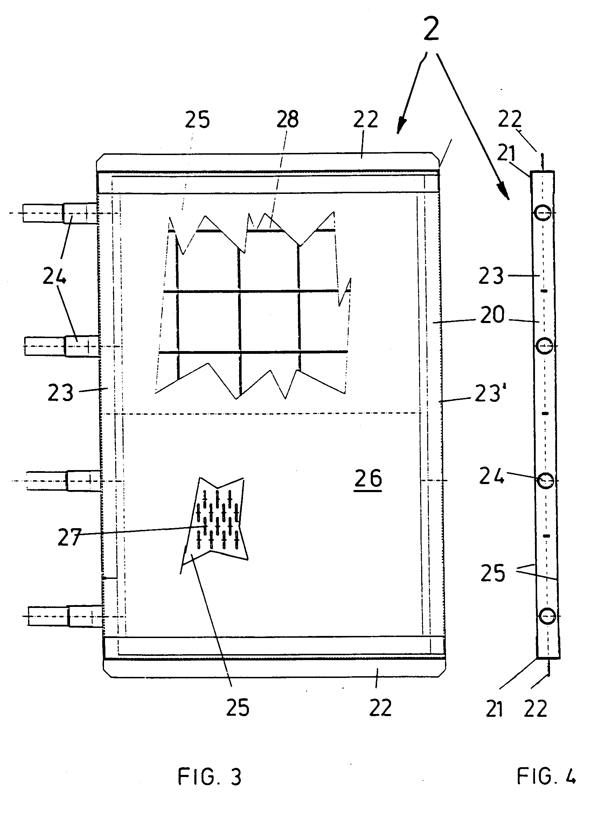

In der Ausführung gemäss den Figuren 1 und 2 ist das Durchlaufbehältnis in der Form eines kubischen Kastens gestaltet. Dieser weist einen Feedeingang 10 und einen Retentatausgang 11 auf. Feedeingang und Retentatausgang sind an den beiden kurzen Stirnseiten des kastenförmigen Durchlaufbehältnisses 1 einander gegenüberliegend angeordnet. Das zu pervaporierende Fluid strömt kontinuierlich durch das Behältnis vom Feedeingang zum Retentatausgang.
Die beiden kurzen Stirnwände 12 sind mit den beiden Frontwänden 13, auf der Vorder- und Rückseite des Behältnisses, fest verbunden, insbesondere verschweisst. Die Ränder der Frontwände 13 sind im Bereich ihrer seitlichen Begrenzung je zu einem umlaufenden Flansch 14 rechtwinklig abgebogen. Diese beiden Flansche 14 bilden die Anlageflächen für die langen, seitlichen Längsstirnwände 15. Diese beiden Längsstirnwände 15 sind deckelartig auf die Flanschen 14 mittels Schraubverbindungen 16 lösbar befestigt. In dem Ueberlappungsbereich der Längsstirnwände 15 und den umlaufenden Flanschen 14 ist eine Dichtung 17 eingelegt. Zur Verstärkung der grossflächigen Frontflächen 13 sind gitterförmige Versteifungsrippen 13' aufgeschweisst. Diese Versteifungsrippen sind nur im oberen Bereich in der Figur 1 ersichtlich, weil der untere Teil des Durchlaufbehältnisses 1 im Schnitt dargestellt ist.
Im kastenförmigen Durchlaufbehältnis 1 sind unten mehrere parallele, kammartige Stützen 18 eingeschweisst, in welche die noch zu beschreibenden Pervaporationskassetten 2 und Heizkassetten 3 gehalten werden. Im dargestellten Beispiel sind in den kammartigen Stützen 18 drei Einschnitte 18' eingelassen, zur Aufnahme einer mittigen Pervaporationskassette und zwei äussere Heizkassetten (welche in den Figuren 1 und 2 nicht dargestellt sind).
Entsprechend sind in den lösbaren Längsstirnwänden 15 Ein- und Auslassöffnungen 19 eingelassen. Um eine möglichst gleichmässige Temperaturverteilung zu erreichen, sind pro Kassette zwei Ein-, beziehungsweise Auslassöffnungen 19 vorgesehen. Dabei sind die Ein- und Auslassöffnungen für die Pervaporationskassette 2, in der eine deckelartige Längsstirnwand und für die beiden Heizkassetten in der anderen Längsstirnwand eingelassen. Dies erlaubt die Heizkassetten an der einen und die Pervaporationskassette an der anderen Längsstirnwand zu befestigen, so dass hierdurch zwei Einschubelemente entstehen. Dies ist für den Unterhalt des Moduls besonders vorteilhaft. Die bereits genannte Pervaporationskassette 2 ist in den Figuren 3 und 4 im Detail dargestellt. Die Pervaporationskassette 2 umfasst eine Rahmenkonstruktion 20, deren obere und untere Leiste 21 je mit einem Haltekamm 22 versehen sind. Diese Haltekämme 22 sind so dimsioniert, dass sie in die Einschnitte 18' in den Stützen 18 im Durchlaufbehältnis 1 einführbar sind. Die eine Längsleiste 23 ist mit Einlassstutzen 24 versehen, während die gegenüberliegende Längsleiste 23' vollständig geschlossen ist.
Innerhalb der Rahmenkonstruktion, mit den Leisten 22,23 und 23' dichtend verbunden sind Trägerbleche 25 angeordnet, die auf der Retentatseite mit einer permselektiven Membran 26 belegt sind. In der Figur 3 ist diese Membran teilweise durchbrochen, so dass man die Lochung 27 in den Trägeblechen 25 erkennen kann. Allgemein können statt Trägerbleche Trägerflächen dienen, die entweder aus Streckmetall, Metallgewebe oder gesintertem synthetischem, keramischem oder metallischem Material mit einer genügenden Porösität bestehen.
Zwischen den beiden Trägerflächen 25, in der Figur 3 gelochte Trägerbleche, ist ein Druck aufnehmendes Gitter 28 eingelegt. Dies ist wesentlich um die Spaltbreite zwischen einer Heizkassette und der benachbarten Pervaporationskassette möglichst gleich zu halten, so dass die Strömungsverhältnisse des Retentates im Spalt möglichst gleichbleibend sind.
Ueber die Aulassstutzen 24 wird das Permeat, beziehungsweise der Permeatdampf abgesogen. Die Kondensation des Permeates erfolgt erst ausserhalb des erfindungsgemässen Moduls.

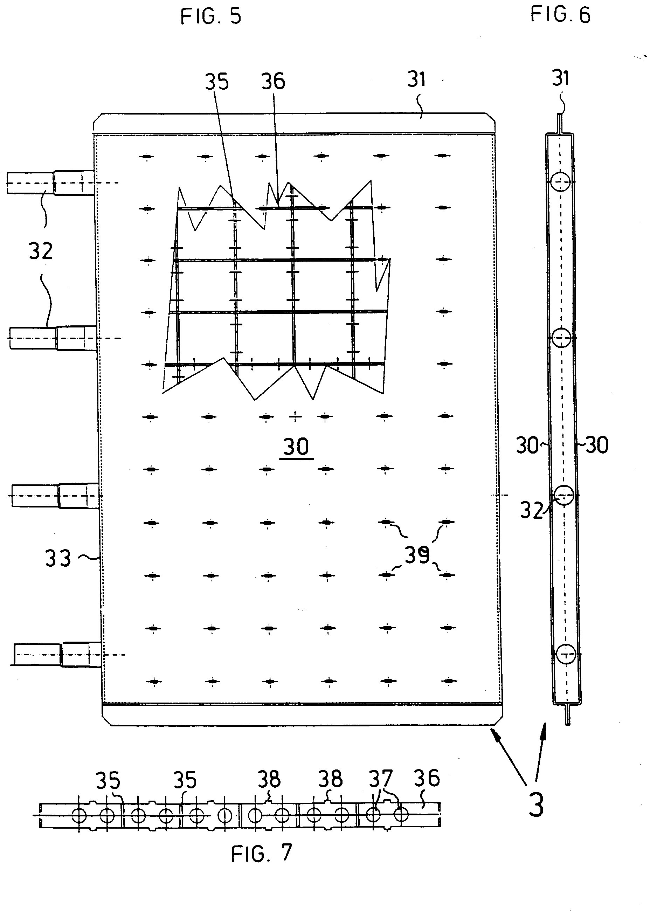

In den Figuren 5-7 ist eine Heizkassette des erfindungsgemässen Moduls im Detail dargestellt. Sie besteht aus zwei Blechen, die an den Längskanten direkt miteinander verbunden sind und an der oberen und unteren Kante ebenfalls zu einem Haltekamm 31 geformt und verschweisst sind, die in die Einschnitte 18' der kammartigen Stützen 18 einführbar sind. In der einen Längsstirnwand 33 sind Ein- und Auslassstutzen 32 vorgesehen, die der Führung des Heizmediums dienen. Auch hier ist der absolut plane Verlauf der Bleche 30 eminent wichtig, um wiederum die Spaltbreite zur benachbarten Pervaporationskassette gleich zu halten. Deshalb ist in der Heizkassette 3 ein Zugkräfte aufnehmender, gitterförmiger Rost 34. Dieser besteht aus kreuzweise verlegten Längs- 35 und Querstege 36. Die Stege sind mit Durchströmungsöffnungen 37 versehen. Die Querstege 36 weisen zusätzlich Nocken 38 auf, die mindestens so hoch, wie die Bleche 30 dick sind. Entsprechend dem Raster der Nocken 38 sind in den Blechen 30 Stanzungen 39 vorhanden, in denen die Nocken formschlüssig passen. Selbstverständlich müssen die Nocken in den Stanzungen dichtend gehalten sein.
Durch diese spezielle Konstruktion der einzelnen Kassetten kann ein sehr schmaler Spalt zwischen der benachbarten Kassetten realisiert werden. Der Spalt zwischen den beiden äussersten Heizkassetten und den Frontwänden 13 des Durchflussbehältnisses kann gegen Null gehen. Somit erübrigt sich eine spezielle Leitung des zu pervaporierenden Fluids. So wird ein relativ einfaches Modul mit hoher Effizienz und ausgezeichneten Wartungseigenschaften realisiert.

## Patentansprüche

1. Modul zur Durchführung der Pervaporation von Fluiden, mit einem Feedeingang (10) und einem Retentatausgang (11), sowie mindestens einer plattenförmigen Pervaporationskammer (2), die beidseitig flächig mit einer permeablen Membran (26) und mit mindestens einen Permeatausgang versehen ist, wobei jede Pervaporationskammer (2) zwischen zwei direkt zu ihr benachbarten, plattenförmigen Heizkammern (3) liegt, dadurch gekennzeichnet, dass die Pervaporationskammern (2) und die Heizkammern (3) von selbsttragenden, in sich geschlossene Kassetten gebildet werden, die bezüglich einander berührungslos, in einem geschlossenen Durchlaufbehältnis (1) beabstandet gehalten sind, so dass das zu pervaporierende Fluid jeweils um jede Pervaporationkassette herum und zwischen dieser und den benachbarten Heizkassetten in einem Spalt geradlinig vom Feedeingang (10) zum Retentatausgang (11) geführt ist.

2. Modul nach Anspruch 1, daruch gekennzeichnet, dass das Durchlaufbehältnis (1) die Form eines rechtwinkligen, schmalen Kastens hat, wobei der Feedeingang (10) und Retentatausgang (11) an zwei einander gegenüberliegenden schmalen Stirnwänden (12) angeordnet sind, während die eine Längsstirnwand (15) als Träger für die plattenförmigen Heizkassetten (3) und die gegenüberliegende Längsstirnwand (15) als Träger für die plattenförmigen Pervaporationskassetten (2) dient, wobei die beiden Längsstirnwände lösbar am Durchlaufbehältnis (1) dichtend gehalten sind.

3. Modul nach Anspruch 2, dadurch gekennzeichnet, dass im Durchlaufbehältnis (1) kammförmige Stützen (18) angeordnet sind, auf denen sich sowohl die Heizkassetten (3) als auch die Pervaporationskassetten (2) abstützen.

4. Modul nach Anspruch 2, dadurch gekennzeichnet, dass die beiden Frontflächen (13) des Durchlaufbehältnisses (1) mit gitterförmig verlaufenden Verstärkungsrippen (13') versehen sind und einen umlaufenden rechtwinklig abstehenden Flansch (14) aufweisen, auf denen die deckelartigen Längsstirnwände (15) aufschraubbar (16) sind.

5. Modul nach Anspruch 2, dadurch gekennzeichnet, dass jede Pervaporationskassette (2) aus zwei miteinander verbundene, gelochte (27), mit permeablem Material (26) belegten Trägerflächen (25) besteht, zwischen denen ein die Druckkraft aufnehmender Rost (28) angeordnet ist.

6. Modul nach Anspruch 2, dadurch gekennzeichnet, dass jede Heizkassette (3) aus zwei miteinander verbundenen, gestanzten Blechen (30) besteht, zwischen denen ein gelochter, die Zugkraft aufnehmender Rost (35,36) mit in die Stanzungen (39) der Bleche (30) formschlüssig passenden Nocken (38), angeordnet ist.

7. Modul nach Anspruch 2, dadurch gekennzeichnet, dass jede Pervaporationskassette (2) an derselben Längsstirnseite (23) mehrere Auslassanschlüsse (24) aufweist.

8. Modul nach Anspruch 2, dadurch gekennzeichnet, dass jede Heizkassette (3) an derselben Längsstirnseite (33) mehrere Einlass- und Auslassanschlüsse (32) aufweist.

9. Modul nach Anspruch 2, dadurch gekennzeichnet, dass das Durchlaufbehältnis (1) die Form eines Zylinders hat, wobei die plattenförmigen Heizkassetten (3) und die plattenförmigen Pervaporationskassetten (2) alternierend und radial verlaufend nebeneinander angeordnet sind.

## Claims

1. Module for performing the pervaporization of fluids, having a feed inlet (10) and a retentate outlet (11), as well as at least one plate-like pervaporization chamber (2), which is provided on both sides in flat manner with a permeable membrane (26) and with at least one permeate outlet, each pervaporization chamber (2) being located between two plate-like heating chambers (3) directly adjacent thereto, characterized in that the pervaporization chambers (2) and the heating chambers (3) are formed by self-supported, closed magazines, which are kept spaced from one another in mutually contactless manner in a closed retention container (1), so that the fluid to be pervaporized in each case is guided around each pervaporization magazine and between the latter and the adjacent heating magazines in a gap and linearly from the feed inlet (10) to the retentate outlet (11).

2. Module according to claim 1, characterized in that the retention container (1) is in the form of a rectangular, narrow box, the feed inlet (10) and the retentate outlet (11) being located on two facing narrow end walls (12), whilst one longitudinal end wall (15) serves as a support for the plate-like heating magazines (3) and the facing longitudinal end wall (15) as a support for the plate-like pervaporization magazines (2), the two longitudinal end walls being detachably held in sealing manner on the retention container (1).

3. Module according to claim 2, characterized in that the retention container (1) contains comb-like supports (18), on which are supported both the heating magazines (3) and the pervaporization magazines (2).

4. Module according to claim 2, characterized in that the two front faces (13) of the retention container (1) are provided with grid-like reinforcing ribs (13') and have an all-round, rectangularly projecting flange (14) onto which can be screwed (16) the cover-like longitudinal end walls (15).

5. Module according to claim 2, characterized in that each pervaporization magazine (2) comprises two interconnected, perforated (27) support surfaces (25) covered with permeable material (26) and between which is placed a grating (28) absorbing the pressure.

6. Module according to claim 2, characterized in that each heating magazine (3) comprises two interconnected, stamped metal sheets (30), between which is located a perforated grating (35, 36) absorbing the tension and with dogs (38) fitting in positive manner in the stampings (39) of the sheets (30).

7. Module according to claim 2, characterized in that each pervaporization magazine (2) has several outlet connections (24) on the same longitudinal end face (23).

8. Module according to claim 2, characterized in that each heating magazine (3) has several inlet and outlet connections (32) on the same longitudinal end face (33).

9. Module according to claim 2, characterized in that the retention container (1) is in the form of a cylinder, the plate-like heating magazines (3) and the plate-like pervaporization magazines (2) being arranged in radially alternating, juxtaposed manner.

## Revendications

1. Module pour la réalisation de la pervaporation de fluides, comportant une entrée d'alimentation (10) et une sortie pour le rétentat (11), ainsi qu'au moins une chambre de pervaporation en forme de plaques (2), qui est munie de chaque côté, en nappe, d'une membrane perméable (26) et d'au moins une sortie pour le perméat, tandis que chaque chambre de pervaporation (2) se situe entre deux chambres de chauffage (3) en forme de plaques qui sont directement voisines d'elle, caractérisé en ce que les chambres de pervaporation (2) et les chambres de chauffage (3) sont formées de cassettes autoportantes, fermées sur elles-mêmes, qui sont maintenues espacées, sans contact l'une avec l'autre, dans un récipient de passage continu fermé (1), de telle sorte que le fluide à faire pervaporer soit conduit autour de chaque cassette de pervaporation et entre celle-ci et la cassette de chauffage voisine dans un interstice en ligne droite de l'entrée d'alimentation (10) à la sortie de rétentat (11).

2. Module selon la revendication 1, caractérisé en ce que le récipient de passage continu (1) a la forme d'une boîte étroite rectangulaire, l'entrée d'alimentation (10) et la sortie de rétentat (11) étant placées sur deux parois d'extrémité étroites (12) opposées l'une à l'autre, tandis que l'une des parois d'extrémité longitudinales (15) sert de support pour les cassettes de chauffage en forme de plaques (3) et la paroi d'extrémité longitudinale lui faisant face (15) sert de support pour les cassettes de pervaporation en forme de plaques (2), les deux parois d'extrémité longitudinales étant maintenues de façon étanche et amovible sur le récipient de passage continu (1).

3. Module selon la revendication 1, caractérisé en ce que sont placés dans le récipient de passage continu (1) des supports en forme de dents (18), sur lesquels s'appuient aussi bien les cassettes de chauffage (3) que les cassettes de pervaporation (2).

4. Module selon la revendication 2, caractérisé en ce que les deux surfaces frontales (13) du récipient de passage continu (1) sont munies de bagues de renforcement en forme de treillis (13') et d'une flasque (14) reposant perpendiculairement en périphérie, sur lesquelles les parois d'extrémité longitudinales (15) formant recouvrement peuvent être vissées (16).

5. Module selon la revendication 2, caractérisé en ce que chaque cassette de pervaporation (2) consiste en deux surfaces supports (25) reliées entre elles, perforées (27), revêtues d'un matériau perméable (26), entre lesquelles est placée une grille absorbant l'effort de pression (28).

6. Module selon la revendication 2, caractérisé en ce que chaque cassette de chauffage (3) consiste en deux tôles estampées reliées entre elles (30), entre lesquelles est disposée une grille perforée (35,36) absorbant l'effort de traction, avec des ergots (38) passant avec engagement positif dans les perforations (39) de la tôle (30).

7. Module selon la revendication 2, caractérisé en ce que chaque cassette de pervaporation (2) présente plusieurs raccords de déversement (24) sur la même face d'extrémité longitudinale (23).

8. Module selon la revendication 2, caractérisé en ce que chaque cassette de chauffage (3) présente plusieurs raccords d'admission et de déversement (32) sur la même face d'extrémité longitudinale (33).

9. Module selon la revendication 2, caractérisé en ce que le récipient de passage continu (1) a la forme d'un cylindre, tandis que les cassettes de chauffage en forme de plaques (3) et les cassettes de pervaporation en forme de plaques (2) sont disposées en alternance et radialement les unes à côté des autres.
